(19) **Europäisches Patentamt** / **European Patent Office** / **Office européen des brevets**

(11) **EP 3 215 897 B1**

(12) **FASCICULE DE BREVET EUROPÉEN**

(45) Date de publication et mention de la délivrance du brevet:
**08.07.2020 Bulletin 2020/28**

(21) Numéro de dépôt: **15805575.6**

(22) Date de dépôt: **04.11.2015**

(51) Int Cl.:
**G05B 23/02** *(2006.01)*        **G05B 13/02** *(2006.01)*

(86) Numéro de dépôt international:
**PCT/FR2015/052973**

(87) Numéro de publication internationale:
**WO 2016/071630 (12.05.2016 Gazette 2016/19)**

(54) **CONTRÔLEUR AMÉLIORÉ D'ÉTAT D'UN SYSTÈME PILOTÉ PAR UNE COMMANDE**

VERBESSERTES STATUSSTEUERGERÄT FÜR EIN DURCH EINEN BEFEHL ANGESTEUERTES SYSTEM

IMPROVED STATE CONTROLLER FOR A SYSTEM DRIVEN BY A COMMAND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2014 FR 1460664**

(43) Date de publication de la demande:
**13.09.2017 Bulletin 2017/37**

(73) Titulaire: **SAFRAN AIRCRAFT ENGINES**
**75015 Paris (FR)**

(72) Inventeurs:
• **COLAS, Stéphane, Fernand, Guy**
  **27200 Vernon (FR)**
• **LE GONIDEC, Serge**
  **27200 Vernon (FR)**

(74) Mandataire: **Cabinet Beau de Loménie**
**158, rue de l'Université**
**75340 Paris Cedex 07 (FR)**

(56) Documents cités:
**US-A1- 2003 028 263     US-A1- 2007 255 446**
**US-A1- 2009 240 480**

## Description

DOMAINE TECHNIQUE GENERAL

La présente invention concerne le domaine des estimateurs d'état d'un système, et trouve une application particulière pour le contrôleur d'état d'un système, d'un engin spatial ou dans le domaine de l'aéronautique.

ETAT DE L'ART

Lors du fonctionnement d'un système, l'état de différents organes tels que des vannes est contrôlé en continu, ces organes ayant communément un rôle majeur dans le fonctionnement du système.

Afin de détecter une panne, certaines stratégies utilisent deux mesures indépendantes sont réalisées et comparées. Si ces mesures diffèrent au-delà d'un seuil prédéfini, alors une anomalie du système de contrôle est détectée.

Il est alors nécessaire de déterminer laquelle de ces deux mesures est juste et laquelle est défectueuse. Or, dans de nombreuses applications, et en particulier dans les applications spatiales et aéronautiques, l'arrêt du système et sa mise en maintenance n'est pas envisageable.

Un modèle est ainsi utilisé pour former une valeur de référence, qui permettra ainsi de différencier deux mesures distinctes et d'identifier la mesure correcte et la mesure erronée. Les solutions utilisées de manière conventionnelles consistent à estimer un modèle linéaire par une intégration numérique à pas constant en temps réel d'un modèle d'état. Cependant, obtenir une précision élevée nécessite un nombre très important de calculs.

A titre d'exemple, en considérant le contrôle d'état d'une vanne dont la vitesse moyenne est de 100°/s, l'obtention d'une précision de 0,1° nécessite un pas d'intégration de 1 ms. Dès lors, l'obtention d'une telle précision impose alors un cadencement de 1ms, ou impose un calcul avec un bouclage d'intégration de 1ms. Le nombre de calculs est donc trop important compte tenu des ressources numériques US2007/255446 divulgue un système et un contrôleur d'état dudit système.

PRESENTATION DE L'INVENTION

Afin de répondre au moins partiellement à ces diverses problématiques, la présente invention propose un contrôleur d'état d'un système, comprenant un calculateur et une mémoire,
le système étant piloté par une commande définissant plusieurs modes de fonctionnement du système, chaque mode de fonctionnement correspondant à l'application d'une valeur de commande,
la mémoire comprenant un ensemble de matrices d'état enregistrées, traduisant pour chaque mode de fonctionnement du système linéaire la valeur de son état dans le temps sous condition de commande constante sur l'espace de temps donné,
le calculateur étant configuré pour, lors du fonctionnement du système, déterminer des valeurs estimées d'état du système à un instant donné au moyen des matrices d'état en mémoire et de son état à un instant antérieur.

Chaque mode de fonctionnement correspond typiquement à l'application d'une valeur de commande constante au système et permet de réduire significativement le coût de calculs.

Pour chaque mode de fonctionnement du système, on détermine avantageusement un nombre N de durées unitaires Ti, telles que pour le système considéré, chaque durée de fonctionnement Tf dans un mode de fonctionnement donné peut être décomposée en $\mathrm{Tf} = \sum_{i=0}^{N} ki * Ti,$ avec ki entiers naturels, chaque fonction d'état traduisant une évolution linéaire de l'état du système sur une durée unitaire Ti donnée. Accessoirement un pas plus fin Tj permet d'estimer la valeur à la résolution Tj, le temps étant décomposé tel que T=n*Ti + m*Tj avec n et m entiers naturels.

En variante, pour chaque mode de fonctionnement du système, on détermine des nombres N et M de durées unitaires Ti et Tj, telles que pour le système considéré, chaque durée de fonctionnement Tf dans un mode de fonctionnement donné peut être décomposée en $\mathrm{Tf} = \sum_{i=0}^{N} ki \times Ti + \sum_{j=0}^{M} kj \times Tj,$ avec ki et kj entiers naturels, chaque fonction d'état traduisant une évolution linéaire de l'état du système sur une durée unitaire Ti ou Tj donnée.

Lesdites fonctions d'état sont typiquement déterminées au moyen d'une méthode d'ordre zéro.

Le calculateur est typiquement configuré pour modifier un paramètre traduisant la commande constante appliquée au système afin de modéliser les évolutions du système lors de son fonctionnement.

L'invention concerne également un procédé de contrôle d'état d'un système piloté par une commande, dans lequel

- on définit un nombre maximum de modes de fonctionnement du système, de manière à ce que pour chaque mode de fonctionnement, le système soit soumis à une commande de valeur constante,
- on détermine un ensemble de fonctions d'état enregistrées, traduisant pour chaque mode de fonctionnement du système son état pour diverses valeurs de temps correspondant aux durées de commande appliquées.
- on stocke les fonctions d'état dans une mémoire, de manière à, lors du fonctionnement du système, déterminer des valeurs estimées d'état du système à un instant donné au moyen des fonctions d'état et de son état à un instant antérieur.

Chaque mode de fonctionnement correspond par exemple à l'application d'une valeur de commande constante au système.

Pour chaque mode de fonctionnement du système, on détermine avantageusement un nombre N de durées unitaires Ti, accessoirement un nombre M de durée unitaire Tj d'un pas inférieur à Ti, telles que pour le système considéré, chaque durée de fonctionnement Tf dans un mode de fonctionnement donné peut être décomposée en $\mathrm{Tf} = \sum_{i=0}^{N} ki * Ti + \sum_{i=0}^{M} kj * Tj$, avec ki, kj entiers naturels, chaque fonction d'état traduisant une valeur de l'état du système linéaire sur une durée N*Ti ou M*Tj donnée. M et N sont de valeurs limités, la somme N*Ti+M*Tj permettant de couvrir la durée des commande constantes appliquées au système.

En variante, pour chaque mode de fonctionnement du système, on détermine des nombres N et M de durées unitaires Ti et Tj, telles que pour le système considéré, chaque durée de fonctionnement Tf dans un mode de fonctionnement donné peut être décomposée en $\mathrm{Tf} = \sum_{i=0}^{N} ki \times Ti + \sum_{j=0}^{M} kj \times Tj$, avec ki et kj entiers naturels, chaque fonction d'état traduisant une évolution linéaire de l'état du système sur une durée unitaire Ti ou Tj donnée.

Lesdites fonctions d'état sont par exemple déterminées au moyen d'une méthode d'ordre zéro.

Le calculateur est typiquement configuré pour modifier un paramètre traduisant la commande constante appliquée au système afin de modéliser les évolutions du système lors de son fonctionnement.

PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :

- la figure 1 représente schématiquement un contrôleur d'état selon un aspect de l'invention,
- la figure 2 représente schématiquement un processus de préparation des matrices pour un contrôleur ou un procédé selon un aspect de l'invention, et
- la figure 3 illustre schématiquement un exemple d'application d'un contrôleur d'état selon un aspect de l'invention.

DESCRIPTION DETAILLEE

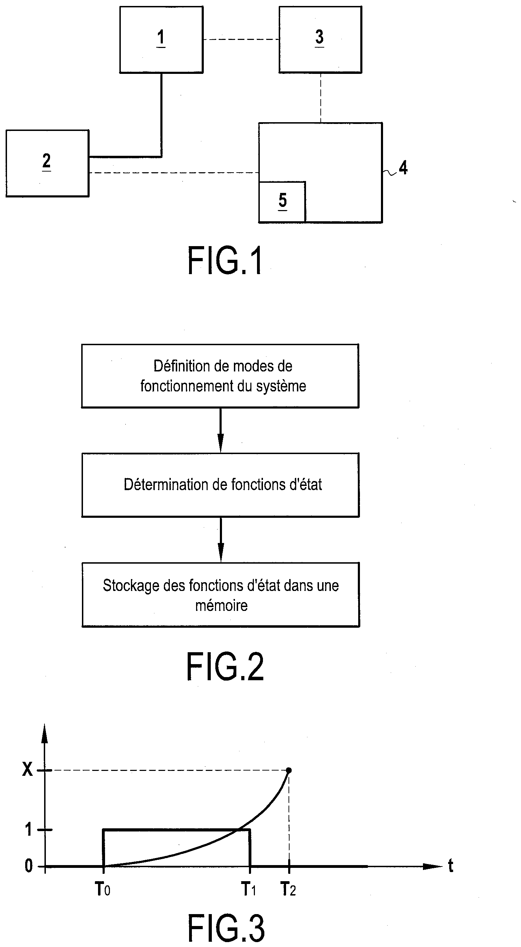

On décrit ci-après un système et un procédé selon un aspect de l'invention, en référence aux figures 1 et 2 qui illustrent schématiquement un tel contrôleur, et un processus de préparation des matrices pour un tel contrôleur ou pour le procédé mis en oeuvre.

Le contrôleur d'état tel que présenté comprend un système 1 piloté par un organe de pilotage 2 appliquant une commande, un ou plusieurs capteurs 3 adaptés pour mesurer un état du système 1, et un calculateur 4 comprenant une mémoire 5.

Le système 1 considéré peut être de tout type, il peut par exemple d'agir d'un rotor de moteur, d'un actionneur ou un système quelconque dès lors que celui-ci fonctionne en régime linéaire, comprenant par exemple un ou plusieurs organes.

L'organe de pilotage 2 pilote le système 1 par l'application d'une commande, typiquement une commande de type créneau, c'est-à-dire une commande constante sur un intervalle de temps donné.

Dans le cas de l'application relatif à une validation de mesure, le capteur 3 acquiert une ou plusieurs mesures d'un état du système 1, et transmet ensuite ces mesures au calculateur 4 de manière à ce qu'il les traite. La réalisation de plusieurs mesures pour la détermination d'un même état permet de réduire les imprécisions, par exemple en réalisant une moyenne entre les différentes mesures.

Le calculateur 4 détermine de plus une valeur d'état estimée, qui est comparée aux valeurs d'état mesurées par le capteur 3, afin de détecter de potentielles erreurs de mesures ou incohérences, auquel cas les valeurs mesurées litigieuses sont écartées, et la valeur d'état estimée est utilisée à la place des valeurs d'état mesurées.

La détermination de cette valeur d'état estimée est réalisée au moyen de fonctions d'état, par exemple déterminées sous la forme de matrices d'état, stockées dans la mémoire 5. Ces fonctions d'état sont déterminées préalablement au fonctionnement du système 1, et sont constantes lors de son fonctionnement.

Les fonctions d'état sont déterminées de manière à, pour chaque mode de fonctionnement du système1, traduire la valeur de la projection dans le temps de l'état du système1. Par mode de fonctionnement du système 1, on entend l'application d'une commande générée par le calculateur 4 et appliquée par l'organe de pilotage 2, un changement de mode de fonctionnement du système1 correspondant typiquement à une rupture de la commande appliquée. Les modes de fonctionnement du système1 peuvent également correspondre aux contraintes externes appliquées au système 1.

On définit ainsi comme paramètres d'entrée du contrôleur le mode de fonctionnement, associé à l'amplitude de commande et aux contraintes externes appliquées au système 1.

A titre d'exemple, si l'on considère un système 1 piloté par une commande de type tout ou rien, on peut considérer trois modes de fonctionnement pour le système 1 ;

- un premier mode de fonctionnement dans lequel la commande appliquée est nulle,
- un second mode de fonctionnement dans lequel la commande appliquée est égale à une valeur constante unitaire 1, et

- un troisième mode de fonctionnement dans lequel la commande appliquée est égale à une valeur constante unitaire -1.

Le nombre de modes de fonctionnement dépend bien entendu de l'organe de pilotage 2 et de la commande appliquée.

Une fois le nombre de modes de fonctionnement du système 1 déterminé, on détermine pour chaque mode de fonctionnement du système 1, un ensemble de fonctions d'état, par exemple sous la forme de matrices d'état, qui traduisent la valeur de la projection dans le temps de l'état du système1 pour un mode de fonctionnement donnée.

On peut par exemple pour chaque mode de fonctionnement du système1, déterminer un nombre N de durées unitaires Ti, telles que chaque durée de fonctionnement Tf dans un mode de fonctionnement donné peut être décomposée en $\mathrm{Tf} = \sum_{i=0}^{N} ki * Ti$, avec ki entiers naturels, chaque fonction d'état traduisant la valeur de la projection de l'état du système 1 sur une durée unitaire Ti donnée.

Pour améliorer la précision, on peut augmenter la résolution en introduisant des durées unitaires Tj sous-multiple de Ti.

Par exemple, en introduisant Ti=10ms et Tj=1ms la durée, pour un créneau de 83ms, il suffit de calculer la valeur de l'état pour 80ms puis pour 3ms.

Les fonctions d'état sont avantageusement déterminées au moyen d'une méthode d'ordre zéro, ce qui permet d'obtenir une précision sensiblement égale ou à tout le moins très proche des méthodes d'intégrations continues, en particulier pour des systèmes 1 linéaires pilotés au moyen d'une commande de type créneau.

Lors du fonctionnement du système 1, le calculateur 4 utilise alors les fonctions d'état correspondant au mode de fonctionnement du système1 pour déterminer une estimation de l'état du système1, les fonctions d'état étant stockées dans la mémoire 5 au préalable, et non pas calculées lors du fonctionnement du système 1.

Le processus de préparation des matrices s'établit alors en trois étape telles qu'illustrées sur la figure 2 :

- une première étape de définition des modes de fonctionnement du système 1,
- une deuxième étape de détermination de fonctions d'état pour les différents modes de fonctionnement du système 1, et
- une troisième étape de stockage des fonctions d'état dans une mémoire, en l'occurrence la mémoire 5 telle que représentée sur la figure 1.

Ainsi, le calculateur 4 peut prendre en compte les variations de fonctionnement du système 1 sans nécessiter de recalculer tout ou partie des fonctions d'état stockées dans la mémoire 5. A chaque cycle de calcul, le calculateur détermine la valeur d'état estimée du système 1 à partir de la valeur d'état antérieure, de la commande appliquée, et des fonctions d'état correspondant au mode de fonctionnement du système, ces fonctions d'état étant stockées dans la mémoire 5 et demeurant constantes lors du fonctionnement du système 1.

La figure 3 représente un exemple d'estimation d'état d'un système.

On représente sur cette figure une commande appliquée à un système au cours du temps, ici une commande de type créneau, pouvant prendre deux valeurs : 0 et 1.

On représente également sur cette figure l'état X estimé à l'instant T2 du système et en fonction du temps son déplacement réel.

A l'état initial, la commande appliquée est nulle, et le système est à un état nul ; il demeure dans son état initial. le système est alors dans un premier mode de fonctionnement, correspondant à l'application d'une commande nulle.

A un instant T0, on applique une commande égale à 1. Le système est alors dans un second mode de fonctionnement. Le calculateur 4 applique alors les fonctions d'état correspondant à ce second mode de fonctionnement du système, et l'état calculé du système évolue donc au cours du temps selon sa dynamique linéaire.

Le calcul de l'état du système est réalisé par pas successifs, et non pas de manière continue, le nombre de pas dépendant de la résolution souhaitée et de la base retenue.

Par exemple, en considérant des ordres d'une durée maximale de 100ms, on définit :

- une base de temps Ti = 10ms, et on stocke en mémoire les matrices d'estimation pour 10, 20, 30, 40, 50, 60, 70, 80, 90 et 100ms ;
- une base de temps Tj = 1ms, et on stocke en en mémoire les matrices d'estimation pour 1, 2, 3, 4, 5, 6, 7, 8 et 9ms.

Une commande d'une durée de 78ms est ainsi calculée en deux calculs à l'aide de la matrice 70ms (i=7) et celle de 8ms (j=8).

A un instant T1 > T0, la commande redevient nulle. Le système est alors dans un troisième mode de fonctionnement, correspondant à une commande nulle à l'issue d'un mouvement. L'état du système évolue donc, par exemple sous l'effet de l'inertie du système, jusqu'à une valeur X à un instant T2 > T1, auquel l'inertie n'a plus d'effet, et où le système repasse alors dans le premier mode de fonctionnement.

Les fonctions d'état déterminées au préalable du fonctionnement du système 1 et stockées dans la mémoire 5 peuvent par exemple être utilisées par un filtre de Kalman afin de calculer l'évolution de l'état du système 1 ou pour toute autre fonction faisant appel à une estimation d'état sous condition de commande par tronçon constant appliqué à un système supposé linéaire.

La présente invention permet ainsi de diminuer considérablement la puissance de calcul nécessaire pour la détermination d'un état d'un système considéré linéaire dans son domaine de fonctionnement, tout en conservant une précision proche voire identique à un système utilisant une intégration numérique continue.

**Revendications**

1. Ensemble comprenant un système (1) et un contrôleur d'état dudit système (1), ledit contrôleur d'état comprenant un calculateur (4) et une mémoire (5), le système (1) comprenant une commande configurée pour appliquer une valeur de commande constante choisie parmi une pluralité de valeurs, chaque valeur définissant un mode de fonctionnement du système (1),
la mémoire (5) comprenant un ensemble de matrices d'état enregistrées, traduisant pour chaque mode de fonctionnement du système (1), la valeur de la projection de son état dans le temps,
le calculateur (4) étant configuré pour, lors du fonctionnement du système, déterminer des valeurs estimées d'état du système (1) à un instant donné au moyen des fonctions d'état et de son état à un instant antérieur,
**caractérisé en ce que** pour chaque mode de fonctionnement du système (1), on détermine un nombre N de durées unitaires Ti, telles que pour le système (1) considéré, chaque durée de fonctionnement Tf dans un mode de fonctionnement donné peut être décomposée en $Tf = \sum_{i=0}^{N} ki * Ti$, avec ki entiers naturels, chaque fonction d'état traduisant une évolution linéaire de l'état du système (1) sur une durée unitaire Ti donnée.

2. Ensemble comprenant un système (1) et un contrôleur d'état dudit système (1), ledit contrôleur d'état comprenant un calculateur (4) et une mémoire (5), le système (1) comprenant une commande configurée pour appliquer une valeur de commande constante choisie parmi une pluralité de valeurs, chaque valeur définissant un mode de fonctionnement du système (1),
la mémoire (5) comprenant un ensemble de matrices d'état enregistrées, traduisant pour chaque mode de fonctionnement du système (1), la valeur de la projection de son état dans le temps,
le calculateur (4) étant configuré pour, lors du fonctionnement du système, déterminer des valeurs estimées d'état du système (1) à un instant donné au moyen des fonctions d'état et de son état à un instant antérieur,
**caractérisé en ce que** pour chaque mode de fonctionnement du système (1), on détermine des nombres N et M de durées unitaires Ti et Tj, telles que pour le système (1) considéré, chaque durée de fonctionnement Tf dans un mode de fonctionnement donné peut être décomposée en $Tf = \sum_{i=0}^{N} ki \times Ti + \sum_{j=0}^{M} kj \times Tj$, avec ki et kj entiers naturels, chaque fonction d'état traduisant une évolution linéaire de l'état du système (1) sur une durée unitaire Ti ou Tj donnée.

3. Ensemble selon l'une des revendications 1 ou 2, dans lequel chaque mode de fonctionnement correspond à l'application d'une valeur de commande constante au système (1).

4. Ensemble selon l'une des revendications 1 à 3, dans lequel laquelle lesdites fonctions d'état sont déterminées au moyen d'une méthode d'ordre zéro.

5. Procédé de contrôle d'état d'un système (1) piloté par une commande, dans lequel

   - on définit un nombre maximum de modes de fonctionnement du système (1), de manière à ce que pour chaque mode de fonctionnement, le système (1) soit soumis à une commande constante,
   - on détermine un ensemble de fonctions d'état enregistrées, traduisant pour chaque mode de fonctionnement du système (1) une valeur de la projection de son état dans le temps,
   - on stocke les fonctions d'état dans une mémoire (5), de manière à, lors du fonctionnement du système (1), déterminer au moyen d'un calculateur (4) des valeurs estimées d'état du système (1) à un instant donné au moyen des fonctions d'état et de son état à un instant antérieur,

   dans lequel pour chaque mode de fonctionnement du système (1), on détermine un nombre N de durées unitaires Ti, telles que pour le système (1) considéré, chaque durée de fonctionnement Tf dans un mode de fonctionnement donné peut être décomposée en $Tf = \sum_{i=0}^{N} ki * Ti$, avec ki entiers naturels, chaque fonction d'état traduisant une évolution linéaire de l'état du système (1) sur une durée unitaire Ti donnée.

6. Procédé de contrôle d'état d'un système (1) piloté par une commande, dans lequel

   - on définit un nombre maximum de modes de fonctionnement du système (1), de manière à ce que pour chaque mode de fonctionnement, le système (1) soit soumis à une commande constante,
   - on détermine un ensemble de fonctions d'état enregistrées, traduisant pour chaque mode de fonctionnement du système (1) une valeur de la projection de son état dans le temps,
- on stocke les fonctions d'état dans une mémoire (5), de manière à, lors du fonctionnement du système (1), déterminer au moyen d'un calculateur (4) des valeurs estimées d'état du système (1) à un instant donné au moyen des fonctions d'état et de son état à un instant antérieur,

dans lequel pour chaque mode de fonctionnement du système (1), on détermine des nombres N et M de durées unitaires Ti et Tj, telles que pour le système (1) considéré, chaque durée de fonctionnement Tf dans un mode de fonctionnement donné peut être décomposée en

$$\text{Tf} = \sum_{i=0}^{N} ki \times Ti + \sum_{j=0}^{M} kj \times Tj$$, avec ki et kj entiers naturels, chaque fonction d'état traduisant une évolution linéaire de l'état du système (1) sur une durée unitaire Ti ou Tj donnée.

7. Procédé selon l'une des revendications 5 ou 6, dans lequel chaque mode de fonctionnement correspond à l'application d'une valeur de commande constante au système (1).

8. Procédé selon l'une des revendications 5 à 7, dans laquelle lesdites fonctions d'état sont déterminées au moyen d'une méthode d'ordre zéro.

**Patentansprüche**

1. Anordnung, umfassend ein System (1) und eine Zustandssteuerung des Systems (1), wobei die Zustandssteuerung einen Computer (4) und einen Speicher (5) umfasst,
wobei das System (1) einen Befehl umfasst, der dazu ausgelegt ist, einen konstanten Befehlswert anzuwenden, der aus einer Mehrzahl von Werten ausgewählt wird, wobei jeder Wert eine Betriebsart des Systems (1) definiert,
wobei der Speicher (5) eine Anordnung von gespeicherten Zustandsmatrizen umfasst, die für jede Betriebsart des Systems (1) den Wert der Projektion seines Zustands über die Zeit widerspiegeln,
wobei der Computer (4) dazu ausgelegt ist, während des Betriebs des Systems geschätzte Zustandswerte des Systems (1) zu einem gegebenen Zeitpunkt mit Hilfe der Zustandsfunktionen und seines Zustands zu einem früheren Zeitpunkt zu bestimmen, **dadurch gekennzeichnet, dass** für jede Betriebsart des Systems (1) eine Anzahl N von Einheitszeiten Ti bestimmt wird, so dass für das betreffende System (1) jede Betriebszeit Tf in einer gegebenen Betriebsart unterteilt werden kann in

$$\text{Tf} = \sum_{i=0}^{N} ki * Ti$$

wobei ki natürliche ganze Zahlen darstellt und jede Zustandsfunktion eine lineare Entwicklung des Zustands des Systems (1) über eine gegebene Einheitszeit Ti widerspiegelt.

2. Anordnung, umfassend ein System (1) und eine Zustandssteuerung des Systems (1), wobei die Zustandssteuerung einen Computer (4) und einen Speicher (5) umfasst,
wobei das System (1) einen Befehl umfasst, der dazu ausgelegt ist, einen konstanten Befehlswert anzuwenden, der aus einer Mehrzahl von Werten ausgewählt wird, wobei jeder Wert eine Betriebsart des Systems (1) definiert,
wobei der Speicher (5) eine Anordnung von gespeicherten Zustandsmatrizen umfasst, die für jede Betriebsart des Systems (1) den Wert der Projektion seines Zustands über die Zeit widerspiegeln,
wobei der Computer (4) dazu ausgelegt ist, während des Betriebs des Systems geschätzte Zustandswerte des Systems (1) zu einem gegebenen Zeitpunkt mit Hilfe der Zustandsfunktionen und seines Zustands zu einem früheren Zeitpunkt zu bestimmen, **dadurch gekennzeichnet, dass** für jede Betriebsart des Systems (1) Anzahlen N und M von Einheitszeiten Ti und Tj bestimmt werden, so dass für das betreffende System (1) jede Betriebszeit Tf in einer gegebenen Betriebsart unterteilt werden kann in

$$\text{Tf} = \sum_{i=0}^{N} ki \times Ti + \sum_{j=0}^{M} kj \times Tj$$

wobei ki und kj natürliche ganze Zahlen darstellen und jede Zustandsfunktion eine lineare Entwicklung des Zustands des Systems (1) über eine gegebene Einheitszeit Ti oder Tj widerspiegelt.

3. Anordnung nach einem der Ansprüche 1 oder 2, wobei jede Betriebsart der Anwendung eines konstanten Befehlswerts auf das System (1) entspricht.

4. Anordnung nach einem der Ansprüche 1 bis 3, wobei die Zustandsfunktionen mit Hilfe eines Verfahrens nullter Ordnung bestimmt werden.

5. Verfahren zur Zustandssteuerung eines Systems (1), das von einem Befehl gesteuert wird, wobei

- eine maximale Anzahl von Betriebsarten des Systems (1) definiert wird, so dass für jede Betriebsart das System (1) einem konstanten Befehl unterliegt,
- eine Anordnung von gespeicherten Zustandsfunktionen bestimmt wird, die für jede Betriebsart des Systems (1) einen Wert der Projektion seines Zustands über die Zeit widerspiegeln,
- die Zustandsfunktionen in einem Speicher (5) derart gespeichert werden, dass während des Betriebs des Systems (1) mittels eines Computers (4) mit Hilfe der Zustandsfunktionen und seines Zustands zu einem früheren Zeitpunkt geschätzte Zustandswerte des Systems (1) zu einem gegebenen Zeitpunkt bestimmt werden,
- wobei für jede Betriebsart des Systems (1) eine Anzahl N von Einheitszeiten Ti bestimmt wird, so dass für das betreffende System (1) jede Betriebszeit Tf in einer gegebenen Betriebsart unterteilt werden kann in

$$\mathrm{Tf} = \sum_{i=0}^{N} ki * Ti$$

wobei ki natürliche ganze Zahlen darstellt und jede Zustandsfunktion eine lineare Entwicklung des Zustands des Systems (1) über eine gegebene Einheitszeit Ti widerspiegelt.

6. Verfahren zur Zustandssteuerung eines Systems (1), das von einem Befehl gesteuert wird, wobei

- eine maximale Anzahl von Betriebsarten des Systems (1) definiert wird, so dass für jede Betriebsart das System (1) einem konstanten Befehl unterliegt,
- eine Anordnung von gespeicherten Zustandsfunktionen bestimmt wird, die für jede Betriebsart des Systems (1) einen Wert der Projektion seines Zustands über die Zeit widerspiegeln,
- die Zustandsfunktionen in einem Speicher (5) derart gespeichert werden, dass während des Betriebs des Systems (1) mittels eines Computers (4) mit Hilfe der Zustandsfunktionen und seines Zustands zu einem früheren Zeitpunkt geschätzte Zustandswerte des Systems (1) zu einem gegebenen Zeitpunkt bestimmt werden, wobei für jede Betriebsart des Systems (1) Anzahlen N und M von Einheitszeiten Ti und Tj bestimmt werden, so dass für das betreffende System (1) jede Betriebszeit Tf in einer gegebenen Betriebsart unterteilt werden kann in

$$\mathrm{Tf} = \sum_{i=0}^{N} ki \times Ti + \sum_{j=0}^{M} kj \times Tj$$

wobei ki und kj natürliche ganze Zahlen darstellen und jede Zustandsfunktion eine lineare Entwicklung des Zustands des Systems (1) über eine gegebene Einheitszeit Ti oder Tj widerspiegelt.

7. Verfahren nach einem der Ansprüche 5 oder 6, wobei jede Betriebsart der Anwendung eines konstanten Befehlswerts auf das System (1) entspricht.

8. Verfahren nach einem der Ansprüche 5 bis 7, wobei die Zustandsfunktionen mit Hilfe eines Verfahrens nullter Ordnung bestimmt werden.

**Claims**

1. An assembly comprising a system (1) and a state monitor for monitoring the state of said system (1), said state monitor comprising a calculator (4) and a memory (5) ;

   • the system (1) comprising a command configured to apply a command of constant value selected from a plurality of values, each value defining a mode of operation of the system (1);
   • the memory (5) containing a set of stored state matrices representing, for each mode of operation of the system (1), the value of the projection of its state in time; and
   • the calculator (4) being configured, during operation of the system, to determine estimated values for the state of the system (1) at a given instant by means of the state functions and of its state at an earlier instant

   **characterized in that** for each mode of operation of the system (1), a number N of unit durations Ti is determined such that, for the system (1) under consideration, each operating duration Tf in a given mode of operation can be decomposed as follows:

$$\mathrm{Tf} = \sum_{i=0}^{N} ki * Ti$$

   where ki are natural integers, each state function representing linear variation of the state of the system (1) over a given unit duration Ti.

2. An assembly comprising a system (1) and a state monitor for monitoring the state of said system (1), said state monitor comprising a calculator (4) and a memory (5) ;

   • the system (1) comprising a command configured to apply a command of constant value selected from a plurality of values, each value defining a mode of operation of the system (1);
   • the memory (5) containing a set of stored state matrices representing, for each mode of operation of the system (1), the value of the projection of its state in time; and
   • the calculator (4) being configured, during operation of the system, to determine estimated values for the state of the system (1) at a given instant by means of the state functions and of its state at an earlier instant

**characterized in that** for each mode of operation of the system (1), numbers N and M of unit durations Ti and Tj are determined such that, for the system (1) under consideration, each operating duration Tf in a given mode of operation can be decomposed as follows:

$$Tf = \sum_{i=0}^{N} ki \times Ti + \sum_{j=0}^{M} kj \times Tj$$

where ki and kj are natural integers, each state function representing linear variation of the state of the system (1) over a given unit duration Ti or Tj.

3. An assembly according to any one of claims 1 or 2, wherein each mode of operation corresponds to applying a command of constant value to the system (1).

4. An assembly according to any one of claims 1 to 3, wherein said state functions are determined by means of a zero order method.

5. A method of monitoring the state of a system (1) controlled by a command, wherein the following steps are performed:

   • defining a maximum number of modes of operation of the system (1) in such a manner that, for each mode of operation, the system (1) is subjected to a command that is constant;
   • determining a set of stored state functions representing, for each mode of operation of the system (1), a value for the projection of its state in time; and
   • storing the state functions in a memory (5) in such a manner that, during operation of the system (1), a calculator (4) determines estimated values for the state of the system (1) at a given instant by means of the state functions and of its state at an earlier instant, wherein for each mode of operation of the system (1), a number N of unit durations Ti is determined such that, for the system (1) under consideration, each operating duration Tf in a given mode of operation can be decomposed as follows:

$$Tf = \sum_{i=0}^{N} ki * Ti$$

where ki are natural integers, each state function representing linear variation of the state of the system (1) over a given unit duration Ti.

6. A method of monitoring the state of a system (1) controlled by a command, wherein the following steps are performed:

   • defining a maximum number of modes of operation of the system (1) in such a manner that, for each mode of operation, the system (1) is subjected to a command that is constant;
   • determining a set of stored state functions representing, for each mode of operation of the system (1), a value for the projection of its state in time; and
   • storing the state functions in a memory (5) in such a manner that, during operation of the system (1), a calculator (4) determines estimated values for the state of the system (1) at a given instant by means of the state functions and of its state at an earlier instant, wherein for each mode of operation of the system (1), numbers N and M of unit durations Ti and Tj are determined such that, for the system (1) under consideration, each operating duration Tf in a given mode of operation can be decomposed as follows:

$$Tf = \sum_{i=0}^{N} ki \times Ti + \sum_{j=0}^{M} kj \times Tj$$

where ki and kj are natural integers, each state function representing linear variation of the state of the system (1) over a given unit duration Ti or Tj.

7. A method according to any one of claims 5 or 6, wherein each mode of operation corresponds to applying a command of constant value to the system (1).

8. A method according to any one of claims 5 to 7, wherein said state functions are determined by means of a zero order method.

## FIG.1

Définition de modes de fonctionnement du système

↓

Détermination de fonctions d'état

↓

Stockage des fonctions d'état dans une mémoire

## FIG.2

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2007255446 A